# EUROPEAN PATENT APPLICATION

(11) **EP 4 769 736 A1**
(43) Date of publication of application: **01.07.2026**
(21) Application number: 25867183.3
(22) Date of filing: 05.08.2025
(51) Int. Cl.: H01M 50/264, H01M 50/291, H01M 50/517, H01M 50/258, H01M 10/04, H01M 50/249

(54) **CELL STACK ASSEMBLY, AND BATTERY PACK AND VEHICLE INCLUDING SAME**

(30) Priority: 21.10.2024 KR 20240143893
(71) Applicant: LG ENERGY SOLUTION, LTD., Seoul 07335 (KR)
(72) Inventor: HEO, Samhoe, Daejeon 34122 (KR); JANG, Sunghwan, Daejeon 34122 (KR); PARK, Dongho, Daejeon 34122 (KR); PARK, Jeongjae, Daejeon 34122 (KR); KIM, Hyeonjae, Daejeon 34122 (KR); LEE, Hyunjun, Daejeon 34122 (KR)
(74) Representative: Plasseraud IP
(86) International application number: PCT/KR2025/011682
(87) International publication number: WO 2026/089226

(57) **Abstract**

A cell stack assembly according to one embodiment of the present invention comprises: a cell stack comprising a plurality of battery cells; a first side beam provided on one side of the cell stack and having a first surface pressure absorbing portion configured therein to absorb surface pressure; and a second side beam provided on another side of the cell stack and having a second surface pressure absorbing portion configured thereinto absorb surface pressure. The first surface pressure absorbing portion and the second surface pressure absorbing portion are hollow structures, which absorb and disperse surface pressure due to volume expansion of the battery cells.

## Description

### TECHNICAL FIELD

The present invention relates to a cell stack assembly and battery pack and a vehicle including the same.

### BACKGROUND

A secondary battery, unlike a primary battery which is non-rechargeable, refers to a battery capable of charging and discharging, and is applied not only to portable devices but also to electric vehicles (EVs, Electric Vehicles) and hybrid electric vehicles (HEVs, Hybrid Electric Vehicles) driven by electric power sources.

Types of secondary batteries widely used today include lithium-ion batteries, lithium polymer batteries, nickel-cadmium batteries, nickel-hydrogen batteries, and nickel-zinc batteries. The operating voltage of a single secondary battery cell, i.e., a unit battery cell, is approximately 2.5 V to 4.6 V. Accordingly, when a higher output voltage is required, a battery pack may be formed by connecting a plurality of battery cells in series.

In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When configuring a battery pack by connecting a plurality of battery cells in series and/or in parallel, it is general practice to first form a cell stack assembly composed of at least one battery cell, preferably a plurality of battery cells, and then configure a battery pack by using at least one such cell stack assembly together with additional components. Here, a cell stack assembly refers to a component in which a plurality of battery cells are connected in series or in parallel, and a battery pack refers to a component in which a plurality of such cell stack assemblies are connected in series or in parallel to increase capacity and output.

In the structure of recent battery packs, swelling of the battery cells may occur, which may cause performance degradation and quality risks due to the maximum surface pressure of the battery cells and deviations in surface pressure within the frame surrounding the battery cells. In particular, the side beams supporting the sides of the cell stack assembly in the battery pack have a structure that cannot reduce surface pressure caused by swelling of the cells since they are not deformable, and therefore are in need of improvement.

### SUMMARY

### TECHNICAL PROBLEM

It is an object of the present invention to improve the structure of a side beam supporting the cell stack assembly from the side, so as to efficiently absorb and disperse the surface pressure generated by the battery cell, thereby enhancing the stability of the battery cell, improving the performance of the battery pack, and extending service life.

However, the technical objects to be solved by the present invention are not limited to those set forth above, and other objects not expressly mentioned will be clearly understood by those skilled in the art from the following description of the invention.

### SOLUTION TO THE PROBLEM

A cell stack assembly according to one embodiment of the present invention comprises: a cell stack including a plurality of battery cells; a first side beam disposed on one side of the cell stack and having a first surface pressure absorbing portion formed therein; and a second side beam disposed on the opposite side of the cell stack and having a second surface pressure absorbing portion formed therein.

In one aspect of the present invention, the first surface pressure absorbing portion and the second surface pressure absorbing portion are formed in a hollow structure.

In one aspect of the present invention, the first surface pressure absorbing portion is formed adjacent to an outer surface of the first side beam opposite an inner surface facing the cell stack, and the second surface pressure absorbing portion is formed adjacent to an inner surface of the second side beam facing the other side of the cell stack.

In one aspect of the present invention, the first side beam and the second side beam are formed in shapes that mate with each other.

In one aspect of the present invention, the first side beam includes a first surface pressure absorbing region formed at a predetermined distance inward from an outer surface of the first side beam toward its inner surface, and when an upper surface of the first side beam is disposed on the same plane as an upper surface of the cell stack, the first surface pressure absorbing region extends so that a portion of the lower surface of the first side beam is disposed on the same plane as a lower surface of the cell stack.

In one aspect of the present invention, the first surface pressure absorbing portion is formed to extend along the height of the first surface pressure absorbing region.

In one aspect of the present invention, the second side beam comprises a second surface pressure absorbing region in which the second surface pressure absorbing portion is formed at a predetermined distance from an inner surface of the second side beam toward an outer surface thereof, and when a lower surface of the second side beam is arranged on the same plane as a lower surface of the cell stack, the second surface pressure absorbing region extends such that a part of an upper surface of the second side beam is positioned on the same plane as an upper surface of the cell stack.

In one aspect of the present invention, the second surface pressure absorbing portion is formed to extend along the height of the second surface pressure absorbing region.

Meanwhile, the present invention provides a battery pack comprising: one or more cell stack assemblies according to the foregoing embodiments; and a pack case providing a space in which the cell stack assemblies are accommodated, wherein when a plurality of the cell stack assemblies are provided, and when one cell stack assembly and another cell stack assembly are arranged in series, a first side beam of the one cell stack assembly and a second side beam of the other cell stack assembly are mated and connected, and wherein the first side beam includes a first surface pressure absorbing portion that absorbs surface pressure, and the second side beam includes a second surface pressure absorbing portion that absorbs surface pressure.

In one aspect of the present invention, the first surface pressure absorbing portion and the second surface pressure absorbing portion are formed in a hollow structure.

In one aspect of the present invention, the first surface pressure absorbing portion is configured to be formed adjacent to an outer surface of the first side beam opposite an inner surface facing the cell stack, and the second surface pressure absorbing portion is configured to be formed adjacent to an inner surface of the second side beam facing the other side of the cell stack.

In one aspect of the present invention, when the cell stack expands, the other side of the first side beam is configured to bend and deform toward the inner side of the first side beam.

In one aspect of the present invention, when the cell stack expands, one side of the second side beam is configured to bend and deform toward its opposite side.

Meanwhile, the present invention relates to a vehicle comprising the battery pack described above.

### ADVANTAGEOUS EFFECTS OF THE INVENTION

According to the present invention, the surface pressure generated due to volume expansion of a battery cell can be effectively absorbed and dispersed through the first side beam and the second side beam, which are provided with a hollow surface pressure absorbing portion.

According to the present invention, physical damage to a battery cell can be minimized and the lifespan of the battery cell can be extended by preventing the surface pressure from being concentrated on a specific area.

According to the present invention, the first side beam and the second side beam can be flexibly deformed in response to the expansion of the battery cells due to the hollow surface pressure absorbing portions, thereby enhancing the performance and durability of the battery pack.

However, the advantageous effects of the present invention are not limited to those described above, and other technical effects not explicitly mentioned will be clearly understood by those of ordinary skill in the art from the following description.

### BRIEF DESCRIPTION OF DRAWINGS

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a perspective view illustrating a cell stack assembly according to an embodiment of the present invention.
FIGS. 2 and 3 are a perspective view and a partial cross-sectional view, respectively, illustrating a structure in which a plurality of cell stack assemblies are combined.
FIG. 4 is a cross-sectional view illustrating deformation caused by the swelling of a battery cell.
FIG. 5 is a perspective view illustrating a battery pack including the cell stack assembly of FIG. 1.
FIG. 6 is a perspective view illustrating a vehicle equipped with the battery pack of FIG. 5.

### MODES FOR CARRYING OUT THE INVENTION

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

A cell stack assembly (1000) according to one embodiment of the present invention comprises a cell stack (100), a first side beam (200), and a second side beam (300).

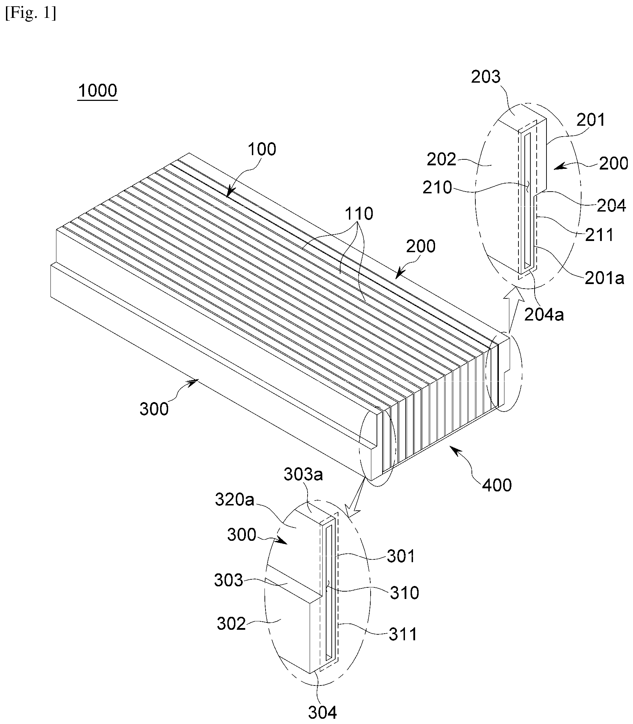

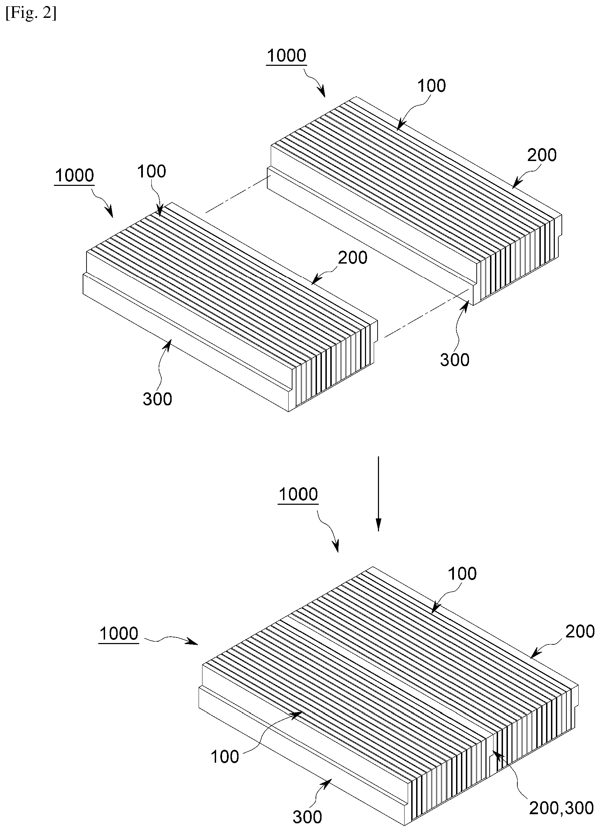

The cell stack (100) is composed of a plurality of battery cells (110), with electrode leads (not shown) extending outward from both sides thereof. As shown in FIGS. 1 and 2, a plurality of battery cells (110) are arranged side-by-side in a horizontal direction while being oriented upright in the vertical direction. The battery cell (110) may be a secondary battery, for example, a pouch-type battery cell.

A first side beam (200) is disposed on one side of the cell stack (100). The first side beam (200) is disposed on one side in the left-right direction along which the plurality of battery cells (110) are stacked. In this embodiment, as illustrated in FIG. 1, the first side beam (200) is disposed on one side, corresponding to the right side of the cell stack (100).

The first side beam (200) is disposed to protect one side of the cell stack (100) and includes a first surface pressure absorbing portion (210) configured to absorb surface pressure therein. The first side beam (200) absorbs the surface pressure that increases as swelling occurs in the battery cell (110) of the cell stack (100) through the first surface pressure absorbing portion (210).

A second side beam (300) is disposed on the other side of the cell stack (100). The second side beam (300) is disposed on the other side in the left-right direction along which the plurality of battery cells (110) are stacked. In this embodiment, as illustrated in FIG. 1, the second side beam (300) is disposed on the other side, corresponding to the left side of the cell stack (100).

The second side beam (300) is disposed to protect the other side of the cell stack (100) and, like the first side beam (200), includes a second surface pressure absorbing portion (310) configured to absorb surface pressure therein. The second side beam (300) absorbs the surface pressure that increases as swelling occurs in the battery cell (110) of the cell stack (100) through the second surface pressure absorbing portion (310).

The first side beam (200) and the second side beam (300) are configured to have complementary shapes aligned with each other. As illustrated in the drawing, the first side beam (200) is formed in a reverse L-shape, and the second side beam (300) is formed in an L-shape.

Therefore, when a plurality of cell stack assemblies (1000) are sequentially arranged along the left-right direction, the first side beam (200) of one cell stack assembly (1000) and the second side beam (300) of another adjacent cell stack assembly (1000) are mated in alignment.

Each of the first surface pressure absorbing portion (210) and the second surface pressure absorbing portion (310) is formed as a hollow structure. Referring to the drawing, each of the first surface pressure absorbing portion (210) and the second surface pressure absorbing portion (310) is formed as a hollow structure having a rectangular cross-section, although other cross-sectional shapes and/or configurations are within the scope of this disclosure.

The first surface pressure absorbing portion (210) is formed adjacent to the other side of the first side beam (200), opposite to the side facing the cell stack (100). Therefore, when the cell stack (100) swells, the other surface of the first side beam (200) is bent and deformed by the surface pressure generated when the battery cells (110) of the cell stack (100) expand, and the first surface pressure absorbing portion (210) absorbs the surface pressure.

The first side beam (200) includes a first surface pressure absorbing area (211). The first surface pressure absorbing area (211) includes a region extending a predetermined distance from the other surface (202) of the first side beam (200) toward one surface (201).

The first side beam (200) is disposed such that its upper surface (203) is positioned on the same plane as the upper surface of the cell stack (100). Furthermore, the first surface pressure absorbing area (211) is formed to extend such that a portion of the lower surface (204) of the first side beam (200) is positioned on the same plane as the lower surface of the cell stack (100). Accordingly, the first surface pressure absorbing portion (210) has a shape that extends along the height of the first surface pressure absorbing area (211). Accordingly, the first side beam (200) is formed in a reverse L-shape, as described above.

The second surface pressure absorbing portion (310) is formed adjacent to one surface of the second side beam (300) facing the other side of the cell stack (100). Accordingly, when the cell stack (100) expands, one surface of the second side beam (300) is bent and deformed by the surface pressure generated when the battery cells (110) of the cell stack (100) expand, and the second surface pressure absorbing portion (310) absorbs the surface pressure.

The second side beam (300) includes a second surface pressure absorbing area (311). The second surface pressure absorbing area (311) includes a region extending a predetermined distance from one surface (301) of the second side beam (300) toward the other surface (302).

The second side beam (300) is disposed such that its lower surface (304) is positioned on the same plane as the lower surface of the cell stack (100). Furthermore, the second surface pressure absorbing area (311) is formed to extend such that a portion of the upper surface (303) of the second side beam (300) is positioned on the same plane as the upper surface of the cell stack (100). Accordingly, the second surface pressure absorbing portion (310) has a shape extending along the height of the second surface pressure absorbing area (311). Accordingly, the second side beam (300) is formed in an L-shape, as described above.

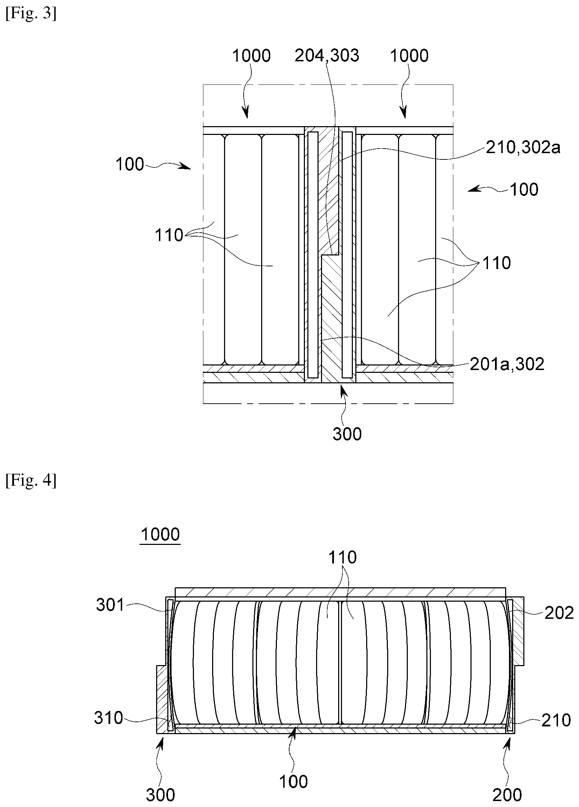

FIG. 2 illustrates the structure in which the cell stack assemblies (1000) are continuously arranged, and FIG. 3 illustrates a cross-sectional view of the mating portion when the cell stack assemblies (1000) are continuously arranged.

As shown in FIGS. 2 and 3, the first side beam (200) of one cell stack assembly (1000) provided on the left side and the second side beam (300) of another cell stack assembly (1000) provided continuously on the right side are aligned and mated with each other so that the cell stack assemblies (1000) are continuously arranged.

Specifically, one surface (201) of the first side beam (200) is brought into contact with the extended other surface (302a) of the second surface pressure absorbing area (311) of the second side beam (300), the lower surface (204) of the first side beam (200) is brought into contact with the upper surface (303) of the second side beam (300), and the extended one surface (201a) of the first surface pressure absorbing area (211) of the first side beam (200) is brought into contact with the other surface (302) of the second side beam (300), whereby the first side beam (200) and the second side beam (300) are aligned and mated with each other.

In this manner, a plurality of cell stack assemblies (1000) can be continuously provided, with the first side beam (200) and the second side beam (300) being aligned to form a battery pack (1).

FIG. 4 illustrates the state in which swelling of a battery cell occurs in a cell stack assembly.

As shown in FIG. 4, the battery cell (110) of the cell stack assembly (1000) may undergo swelling. When each battery cell (110) undergoes swelling, the battery cell (110) becomes deformed. As shown in FIG. 4, the battery cell (110) is deformed into a convex shape, and the first side beam (200) and the second side beam (300) disposed at the left and right ends are deformed by the swollen battery cell (110).

In accordance with the deformation of the battery cell (110), the other surface (202) of the first side beam (200) is bent and deformed toward the first surface pressure absorbing portion (210). The first surface pressure absorbing portion (210) is formed as a hollow structure so as to accommodate deformation when the other surface (202) of the first side beam (200) is bent toward the first surface pressure absorbing portion (210).

Accordingly, the surface pressure generated in the battery cell (110) can be effectively distributed into the first surface pressure absorbing portion (210), thereby enhancing the stability of the battery cell (110).

Furthermore, in accordance with the deformation of the battery cell (110), one surface (301) of the second side beam (300) is bent and deformed toward the second surface pressure absorbing portion (310). The second surface pressure absorbing portion (310) is formed as a hollow structure so as to accommodate deformation when one surface (301) of the second side beam (300) is bent toward the second surface pressure absorbing portion (310).

Accordingly, the surface pressure generated in the battery cell (110) can be effectively distributed into the second surface pressure absorbing portion (310), thereby further improving the stability of the battery cell (110).

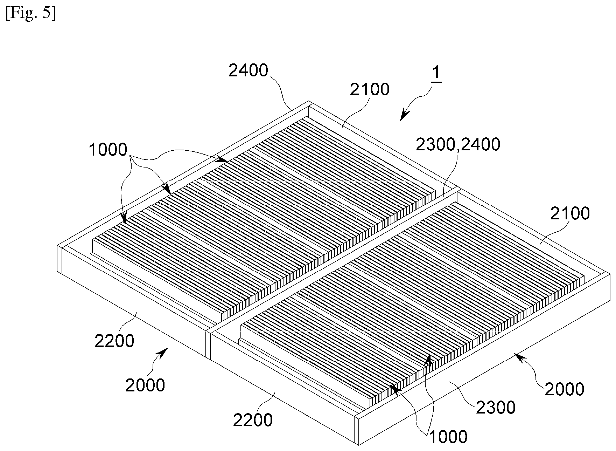

FIG. 5 illustrates a battery pack (1).

The battery pack (1) according to FIG. 5 includes a cell stack assembly (1000) and a pack case (2000) as described above. The battery pack (1) comprises a plurality of cell stack assemblies (1000). The cell stack assemblies (1000) may be continuously stacked in the left-right direction and/or the up-down direction, similar to the battery cells (110).

One cell stack assembly (1000) and another adjacent cell stack assembly (1000) are connected by mating the second side beam (300) of one cell stack assembly (1000) with the first side beam (200) of the other cell stack assembly (1000).

A plurality of cell stack assemblies (1000), in which the first side beam (200) and the second side beam (300) are connected in a mating relationship, are accommodated inside the pack case (2000). The pack case (2000) provides a space in which a plurality of cell stack assemblies (1000) are accommodated. The pack case (2000) includes a base plate (not shown), left and right sidewalls (2100, 2200), and front and rear sidewalls (2300, 2400). By this configuration, the pack case (2000) supports the lower and side portions of the plurality of cell stack assemblies (1000) and protects the cell stack assemblies (1000).

The pack case (2000) includes, but is not limited to, a base plate (not shown), left and right sidewalls (2100, 2200), and front and rear sidewalls (2300, 2400) as basic components. As shown in FIG. 5, when a plurality of battery packs (1) are provided, one of the left and right sidewalls (2100, 2200) or one of the front and rear sidewalls (2300, 2400) may be omitted.

When a plurality of battery packs (1) are provided, they may be continuously arranged in the front-rear direction, as shown in FIG. 5, or may be continuously arranged in the left-right direction, depending on the specifications of the product to which the battery packs (1) are applied. That is, the direction in which the battery packs (1) are continuously arranged is not limited thereto and may be varied in various ways.

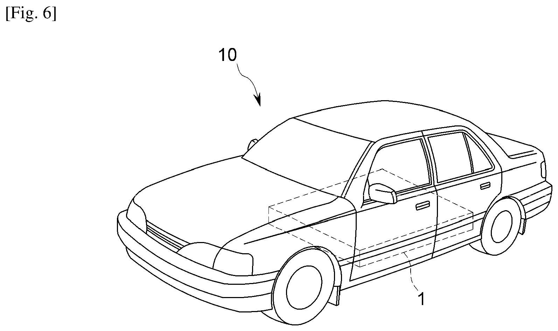

FIG. 6 illustrates a vehicle (10) equipped with a battery pack (1).

The vehicle (10) according to the present invention may include the battery pack (1) according to the present invention, as illustrated in FIG. 6. The vehicle (10) may include, for example, an electric vehicle or a hybrid vehicle that uses electricity as a driving source.

In addition, the vehicle according to the present invention may further comprise various other components included in the vehicle, such as a vehicle body or a motor, in addition to the battery pack (1).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

### [REFERENCE NUMERALS]

1: Battery Pack
10: Vehicle
1000: Cell Stack Assembly
100: Cell Stack
110: Battery Cell
200: First Side Beam
210: First Surface Pressure Absorbing Portion
211: First Surface Pressure Absorbing Region
300: Second Side Beam
310: Second Surface Pressure Absorbing Portion
311: Second Surface Pressure Absorbing Region
2000: Pack Case
2100: Left Sidewall
2200: Right Sidewall
2300: Front Sidewall
2400: Rear Sidewall

### [INDUSTRIAL APPLICABILITY]

The present invention can be used to improve the stability and performance of a battery cell and extend its lifespan by efficiently absorbing and dispersing the surface pressure generated in the battery cell.

## Claims

1. A cell stack assembly comprising:
a cell stack comprising a plurality of battery cells;
a first side beam provided on one side of the cell stack and having a first surface pressure absorbing portion configured to absorb surface pressure; and
a second side beam provided on another side of the cell stack and having a second surface pressure absorbing portion configured therein to absorb surface pressure.

2. The cell stack assembly of claim 1, wherein the first surface pressure absorbing portion and the second surface pressure absorbing portion are hollow structures.

3. The cell stack assembly of claim 2, wherein the first surface pressure absorbing portion is adjacent to an outer surface of the first side beam and an inner surface of the first side beam that faces a first side of the cell stack, and wherein the second surface pressure absorbing portion is adjacent to an inner surface of the second side beam that faces a second side side of the cell stack.

4. The cell stack assembly of claim 1, wherein the first side beam and the second side beam are formed to have mating shapes.

5. The cell stack assembly of claim 3,
wherein the first side beam comprises a first surface pressure absorbing region in which the first surface pressure absorbing portion is formed at a predetermined distance from the outer surface of the first side beam, and
wherein an upper surface of the first side beam is disposed on a same plane as an upper surface of the cell stack and the first surface pressure absorbing region extends such that at least a portion of a lower surface of the first side beam is positioned on a same plane as a lower surface of the cell stack.

6. The cell stack assembly of claim 5, wherein the first surface pressure absorbing portion extends in a direction of a height of the first surface pressure absorbing region.

7. The cell stack assembly of claim 3,
wherein the second side beam comprises a second surface pressure absorbing region in which the second surface pressure absorbing portion is formed at a predetermined distance from an inner surface of the second side beam, and
wherein a lower surface of the second side beam is disposed on a same plane as a lower surface of the cell stack and the second surface pressure absorbing region extends such that at least a portion of an upper surface of the second side beam is positioned on a same plane as an upper surface of the cell stack.

8. The cell stack assembly of claim 7, wherein the second surface pressure absorbing portion extends in a direction of a height of the second surface pressure absorbing region.

9. A battery pack, comprising:
at least one cell stack assembly as recited in claim 1; and
a pack case providing a space in which a plurality of the cell stack assemblies are provided, and
wherein one cell stack assembly and another cell stack assembly are arranged in series, a first side beam of the one cell stack assembly and a second side beam of the other cell stack assembly are configured to be mated and connected, and
wherein the first side beam includes a first surface pressure absorbing portion that absorbs surface pressure, and the second side beam includes a second surface pressure absorbing portion that absorbs surface pressure.

10. The battery pack of claim 9, wherein the first surface pressure absorbing portion and the second surface pressure absorbing portion are hollow structures .

11. The battery pack of claim 10,
wherein the first surface pressure absorbing portion is adjacent to an outer surface of the first side beam and an inner surface of the first side beam that faces a first side of the cell stack assembly, and
wherein the second surface pressure absorbing portion is adjacent to an inner surface of the second side beam that faces a second side of the cell stack assembly.

12. The battery pack of claim 11, wherein the outer surface of the first side beam is configured to deform toward the inner surface of the first side beam in response to cell stack expansion.

13. The battery pack of claim 11, wherein the inner surface of the second side beam is configured to deform toward the outer surface of the second side beam in response to cell stack expansion.

14. A vehicle, comprising a battery pack as recited in claim 9.
